Europäisches Patentamt

European Patent Office

Office européen des brevets

(19)

(11) Publication number: **0 270 357 B1**

## EUROPEAN PATENT SPECIFICATION

(12)

(45) Date of publication of patent specification: **06.05.92**

(51) Int. Cl.5: **G11B 21/08**, G11B 7/00, G11B 7/09

(21) Application number: **87310615.7**

(22) Date of filing: **02.12.87**

Divisional application 90121579.8 filed on 02/12/87.

(54) **Optical disk drive device and information storage device.**

(30) Priority: **02.12.86 JP 288423/86**
**15.06.87 JP 147033/87**
**30.04.87 JP 104744/87**
**29.06.87 JP 159834/87**
**05.08.87 JP 196842/87**

(43) Date of publication of application:
**08.06.88 Bulletin 88/23**

(45) Publication of the grant of the patent:
**06.05.92 Bulletin 92/19**

(84) Designated Contracting States:
**DE FR GB**

(56) References cited:
**EP-A- 0 083 170**
**EP-A- 0 183 554**

(73) Proprietor: **MITSUBISHI DENKI KABUSHIKI KAISHA**
**2-3, Marunouchi 2-chome Chiyoda-ku**
**Tokyo 100(JP)**

(72) Inventor: **Ogawa, Masaharu Mitsubishi Denki K.K.**
**Oyokikikenkyusho 1-1, Tsukaguchihonmachi 8-chome**
**Amagasaki-shi Hyogo-ken(JP)**

(74) Representative: **Barnard, Eric Edward et al**
**BROOKES & MARTIN High Holborn House**
**52/54 High Holborn**
**London WC1V 6SE(GB)**

Rank Xerox (UK) Business Services
(3.08/2.18/2.0)

**Description**

The present invention relates to an optical disk drive device, and more particularly, to an optical disk drive device which controls access of a light spot to an arbitrary track on an optical disk.

BACKGROUND OF THE INVENTION

Figure 1 shows a block diagram of an access control system described in Japanese Patent Application No. 101,439/1985 filed by the assignee of the present application on May 15, 1985 for an "Optical Disk Drive Device", published as JP-A-61260474

As illustrated, an optical disk 101 has a plurality of recording tracks on the disk. The tracks comprise series of pits disposed at a high density arid arranged in a circular or spiral form. The disk 101 is fitted onto a spindle and is rotated by a disk-drive motor 102. The disk-drive motor 102 is rotated under the control of a disk-motor-drive control system 103.

An optical head 104 forms a light spot on the optical disk 101. The light spot is moved in the radial direction of the optical disk 101. The optical head 104 comprises a frame 105, a source of light such as a semiconductor laser 106, a collimating lens 107, a polarization beam splitter 108, a $\lambda$ /4 plate 109, an optical-path changing mirror 110, an objective lens 111 which focuses the light beam from the light source 106 onto the medium surface of the optical disk 101 and forms a light spot 115 on the surface, a tracking actuator 112 which provides fine or microscopic movements of the objective lens 111 in the radial direction of the optical disk 101 for accurate positioning of the light spot on a recording track of the optical disk, and a split-photodetector 113 which has a pair of sensor parts adjacent to each other for detecting the return light reflected from the optical disk 101, and produces a pair of electrical signals corresponding to the amount of light received at the respective sensor parts.

An addition/subtraction amplifying circuit 114 determines the sum of the outputs from the split-photodetector 113 to produce a sum signal as an information signal (reproduced data signal), and determines the difference between the outputs of the split photodetector 113 to produce a difference signal as a tracking error signal. The tracking error signal is supplied to a track-traverse counter 118 and a speed-detecting circuit 120.

The track-traversing counter 118 receives the output signal from the addition/subtraction amplifying circuit 114 and detects the number of tracks traversed by the optical head 104. An output of this counter 118 is supplied to a target-velocity generation circuit 119.

The target-velocity generation circuit 119 receives the output signal of the track-traversing counter 118, and, at the time of access, generates a target-velocity signal for the light spot 115. The target-velocity signal is sent to a head-actuator drive control circuit 117.

The head-actuator drive control circuit 117 also receives an output signal from a polarity switching circuit 2. On the basis of these signals, the head actuator drive control circuit 117 controls the drive of a head actuator 116, such as a linear actuator.

The head actuator 116 is driven through the head-actuator drive control circuit 117 to move the optical head 104 in the radial direction of the optical disk 101.

A speed detection circuit 120 detects the track-traverse speed (the speed with which light spot 115 traverses the tracks on the optical disk 115). The output of the speed detection circuit 120 is fed to the polarity switching circuit 2. The speed detection circuit 120, together with the polarity-switching circuit 2, forms a velocity-detection circuit 124.

The polarity-switching circuit 2 receives an output signal from an access-direction command generation circuit 123. Under the control of the output signal of the access-direction command generation circuit 123, the polarity-switching circuit 2 changes the polarity of the output of the speed detection circuit 120. More specifically, the detected speed (a scalar value) is converted into a detected velocity (a vector value) which also shows the direction.

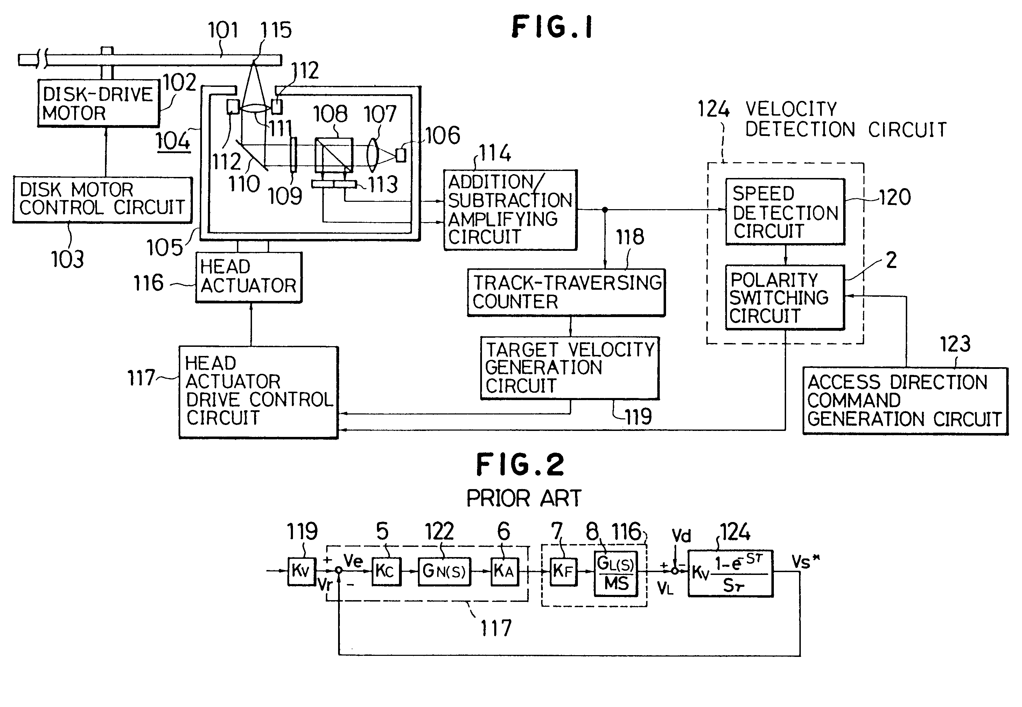

Figure 2 is a transfer-function block diagram of the velocity-control system which represents the diagram of Figure 1. In this drawing, the results of the subtraction between the output signal $V_s^*$ of the velocity detection circuit 124 and the output signal $V_r$ of the target-velocity generation circuit 119 is input to a gain compensation circuit 5. The gain compensation circuit 5 determines the frequency band of the velocity control system.

The gain compensation circuit 5, as well as a notch filter 122 and a head-actuator drive circuit 6, are built into the head-actuator drive control circuit 117. The notch filter 122 compensates the mechanical resonance characteristics $G_L(S)$ of a block 6 in the head actuator 116.

The head-actuator drive circuit 6 is normally of a current drive type, and also contains a drive current detection circuit.

A block 7 in the head actuator 116 represents a force constant of the head actuator 116. The block 8 represents transfer characteristics. Its input is an acceleration, and its output is a head velocity $V_L$ (the velocity with which the optical head 105 is moved by the head actuator 116). M designates the mass of the movable part, $G_L(S)$ designates the mechanical resonance characteristics of the head actuator, and S represents Laplacean. $K_V$ represents the sensitivity in the velocity detection of the target-velocity generation circuit 119 and the velocity-detection circuit 124, and $\tau$ represents the track traverse period (period taken for the light spot 115 to traverse a track).

Figure 3 shows an example of gain characteristic of $G_L(S)$ in the block 8 in Figure 2 which is shown to have a large resonance peak at a certain frequency $\omega_L$ (usually in the order of kHz). Figure 4 on the other hand illustrates the gain characteristics $|G_N(S)|$ of the notch filter 122 in Figure 2. $G_n(S)$ is selected so that:

$$|G_N(S)| \simeq |1/G_L(S)|,$$

when

$$\omega_N = \omega_L.$$

Figure 5 and Figure 6 show open-loop characteristics of the system of Figure 2. Figure 5 shows a case where $G_N(S) = 1/G_L(S)$, while Figure 6 shows a case where $G_N(S) \neq 1/G_L(S)$.

The system operates in the following manner:

First, the disk drive motor 102 is energized through the disk-drive-motor control circuit 103, and the optical disk 101 shown in Figure 1 begins to rotate. When the rotation speed reaches a predetermined steady value, the tracking actuator 112 is controlled on the basis of a tracking error signal obtained by the photodetector 113 and addition/subtraction amplifying circuit 114. As a result, the light spot 115 begins to follow the center of a track on the optical disk 101.

At the time of track access, the number of tracks on the optical disk 101, which have been traversed by the light spot 115, is counted by the track-traversing counter 118, and, at the same time, in accordance with the number of tracks to be traversed to reach the target track, the target velocity, which is output from the target-velocity generation circuit 119, and the track-traverse velocity of the light spot 115, which is detected by the velocity-detection circuit 124, are input to the head-actuator drive control circuit 117, which performs velocity control in which the velocity is reduced to zero as the light spot 115 approaches the the target track.

Operation of the velocity control system of Figure 2 at the time of track access will now be described in detail. A velocity deviation signal Ve, which is the difference between the target-velocity signal $V_r$ from the target-velocity generation circuit 119 and the detected-velocity signal $V_s^*$ from the velocity detector 124, is transmitted to the actuator drive circuit 6 through the gain-compensation circuit 5 and the notch filter 122. As a result, a certain drive current is applied to the head actuator 116. Due to this drive current, the head actuator 116 begins to move the optical head 104, causing the light spot 115 to traverse the tracks on the optical disk 101.

If the track fluctuation velocity, due for example to eccentricity of the optical disk 101, is denoted by Vd, the difference between the velocity of the head actuator 116 and the track fluctuation velocity $V_o$ is detected by the velocity detection circuit 124 as a detected-velocity signal $V_s^*$. This detected-velocity signal $V_s^*$ is fed back in a velocity control system and the control is so made that the detected-velocity signal $V_s^*$ coincides with the target-velocity signal $V_r$.

A loop transfer function (open-loop characteristics) of this velocity-control system from the velocity-deviation signal Ve to the detected-velocity signal $v_s^*$ can be expressed as follows:

$$G_{01}(S) = \frac{V_s^*(S)}{Ve(S)} = \frac{K_C K_A K_F K_V}{MS} \cdot G_N(S)G_L(S) \frac{1-e^{-S\tau}}{S\tau}$$

$$\ldots (1)$$

3

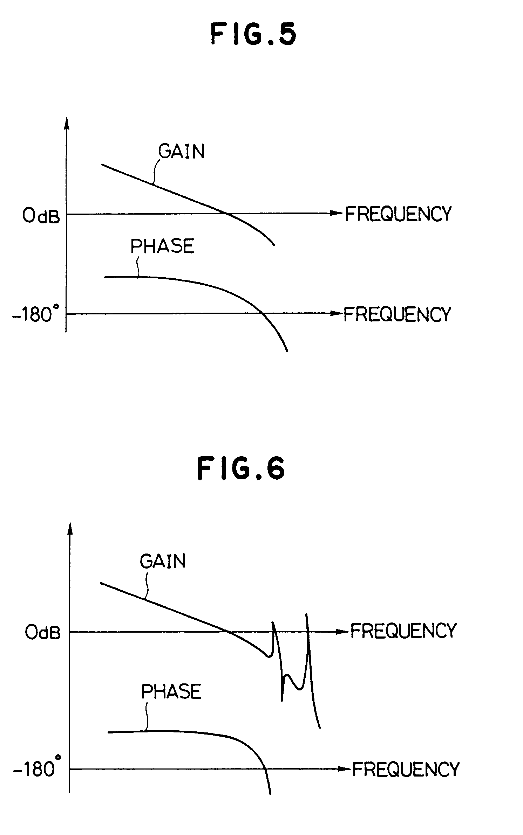

If it is so designed that the condition $G_N(S) = 1/G_L(S)$ is satisfied, the head actuator does not have the resonance frequency in the high-frequency zone, as shown in the upper part of Figure 5. But if $G_N(S) \neq 1/G_L(S)$ because of manufacturing fluctuations between individual devices, the head actuator may have a resonance frequency in the high-frequency band as shown in Figure 6. When the peak of this resonance exceeds $0_{db}$, the velocity-control system loses its stability.

Moreover, because of a certain dead time of the zero-order hold characteristics of the velocity-detection circuit 124, a long delay in phase is observed in the vicinity of the track-traversing frequency.

Because of the configuration described above, the conventional optical disk drive device had the following problems:

(1) The track traverse velocity is detected based on the track traverse period. When the traverse is made at a low velocity, a time delay (dead time) is lengthened, and the velocity control system loses its stability, and because the cut-off frequency of the velocity-control system must be designed low, the velocity deviation will be increased.

(2) When the light spot 115 traverses drop-out or data address recording portions, such traverse may erroneously be recognized as traverse of tracks, and, in spite of the slow movement of the light spot, the velocity detection circuit 124 erroneously operates as if the track traverse velocity were high. The result is that the velocity control system is disturbed.

(3) The head actuator 116 typically has a high mechanical resonance at the frequency of several kHz. In order to eliminate this phenomenon, a notch filter 122 is built in the head actuator drive-control system. If, however, there are a plurality of resonance frequencies, a plurality of notch filters need to be provided, and the size of the circuit of the system is therefore enlarged. In addition, where there are differences in the resonance frequency from one device to another, and the resonance frequencies differ from the frequencies of the notch filters, and the velocity-control system is not stable.

(4) Because the known system does not detect the direction in which light spot 115 traverses the tracks, but simply assumes that the light spot 115 is traversing the tracks in the direction (toward the inner or outer periphery of the disk) in which the access is to be made and determines the required velocity by changing the polarity of the speed. When the speed is low, and the direction in which the track is traversed is reversed due to track fluctuation or disturbances, a positive feed-back is applied to the system, and the optical disk may behave erratically.

SUMMARY OF THE INVENTION

It is an object of the present invention to compensate the dead time of the velocity-detection circuit, increase the stability of operation of the velocity-control system, widen the operating frequency-band of the system, reduce deviation in the velocity, decrease disturbances of the velocity-control system caused by erroneous operation of the velocity-detection circuit at the moment of passage over drop-out and address data portions of the disk, eliminate the notch filter thereby simplifying the circuit, and suppress the influence of the mechanical resonance at any frequency.

Another object of the invention is to protect the optical head from behaving erratically, even when the track traverse direction is reversed due to disturbances or track fluctuations.

An optical disk drive device according to the invention as defined in appended claim 1 comprises:

an optical head which forms a light spot on an optical disk with multiple tracks, said optical head including an photodetector which receives light reflected from said tracks and provides a photoelectric conversion signal, and a movable part including a lens for focusing said light spot on said optical disk;

a head actuator which is connected to said optical head and which, when said optical head accesses said tracks of said optical disk, moves said movable part in a radial direction of said optical disk;

a motion detection means which is connected to said photodetector, and which receives said photoelectric conversion signal produced by said photodetector and produces as output a track-traverse motion signal representing the track-traverse motion of said light spot;

a target velocity generating means for generating a track-traversing target velocity and a head actuator drive circuit connected to said target velocity generation means for controlling said head actuator. In accordance with the invention there is provided an accelerator detecting means for detecting the acceleration of said head actuator and producing an output signal representative thereof, and a state-observer means which is connected to said acceleration detecting means and said motion detecting means and produces as output an estimated track-traverse velocity of said light spot based on the output signals from said acceleration detecting means and said motion detecting means which output is delivered to the head actuator driver circuit to control said head actuator such that the estimated velocity coincides with said target velocity.

EP 0 270 357 B1

Further preferred features of the invention are defined in the dependent claims.

BRIEF DESCRIPTION OF THE DRAWINGS

Figure 1 a block diagram of a known optical disk drive device.

Figure 2 is a block diagram of the velocity-control system used in the known optical disk drive device.

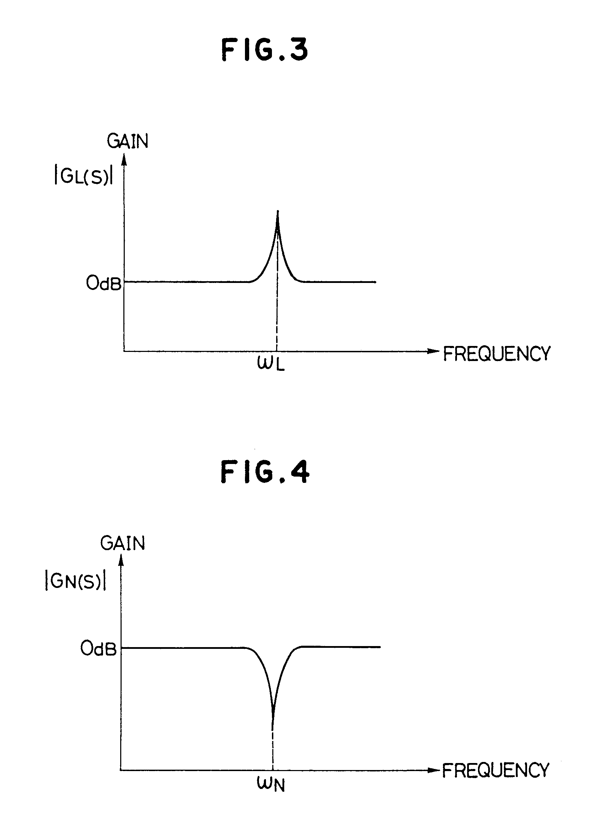

Figure 3 shows high-frequency-band resonance frequency characteristics of the mechanical system.

Figure 4 shows an example of frequency characteristics of a notch filter built in the velocity-control system of Figure 2.

Figure 5 and Figure 6 respectively show examples of the open-loop characteristics of the velocity-control system shown in Figure 2.

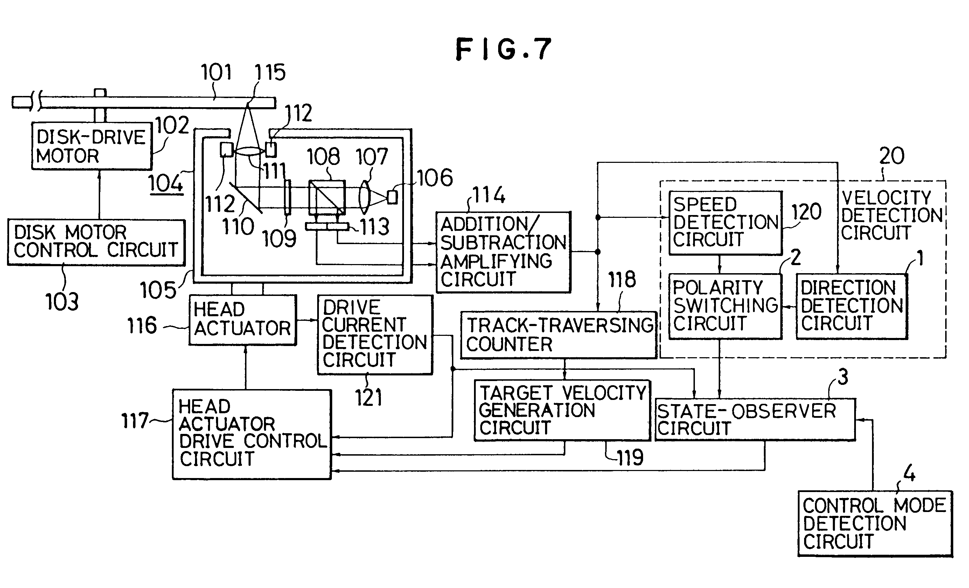

Figure 7 is a block diagram of the optical disk drive device of an embodiment of the invention.

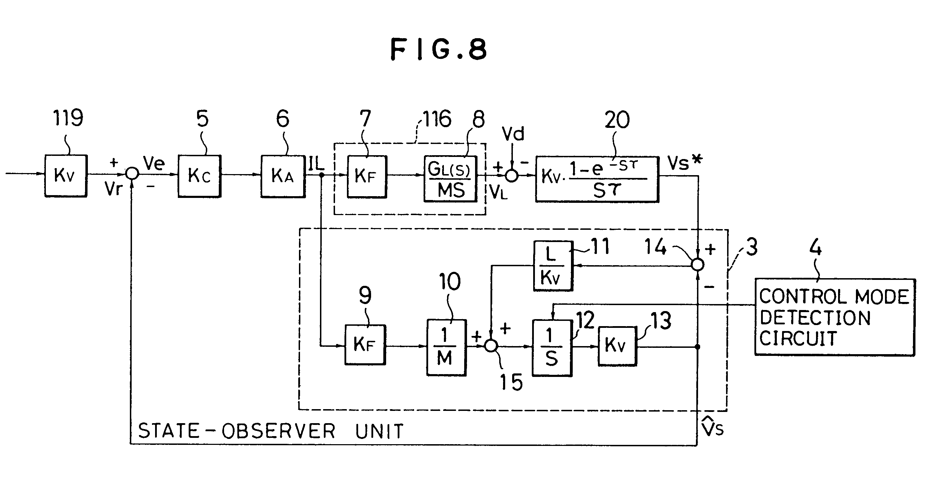

Figure 8 is a block diagram of the velocity-control system incorporated in the optical disk drive device.

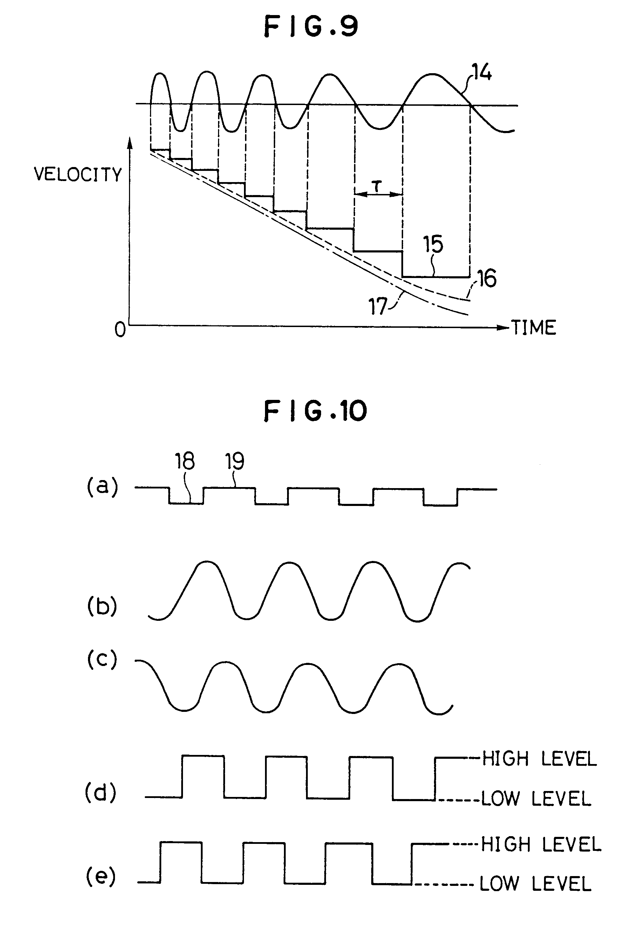

Figure 9 is a diagram which explains the operation of the state-observer unit in the optical disk drive device.

Figure 10 is a diagram which explains the operation of the direction-detection circuit of the optical disk drive device.

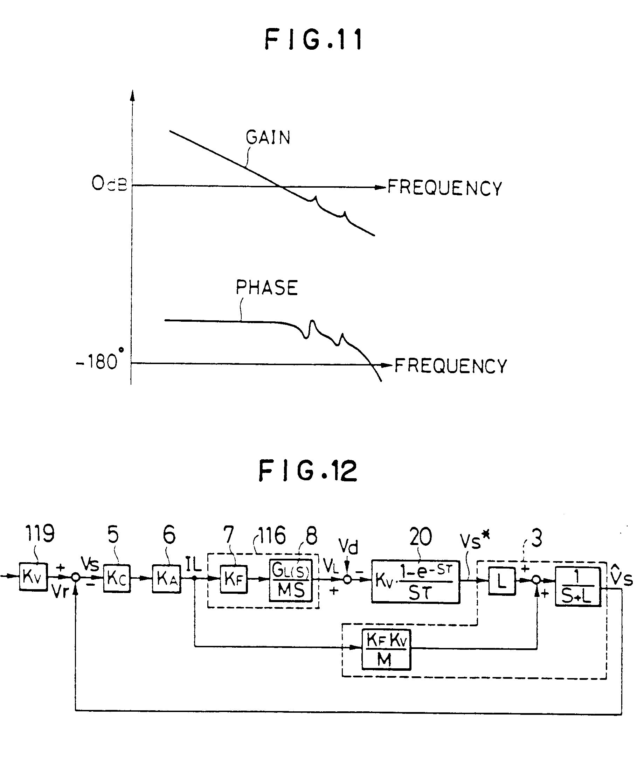

Figure 11 is an example of an open-loop transfer characteristic of the velocity-control system of Figure 8.

Figure 12 is a block diagram of a velocity-control system of the optical disk drive system of another embodiment of the invention.

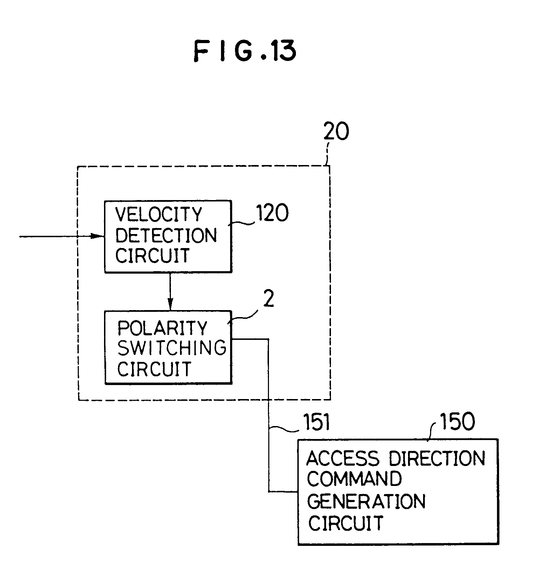

Figure 13 is a diagram showing a modification of the optical disk drive system of Figure 7.

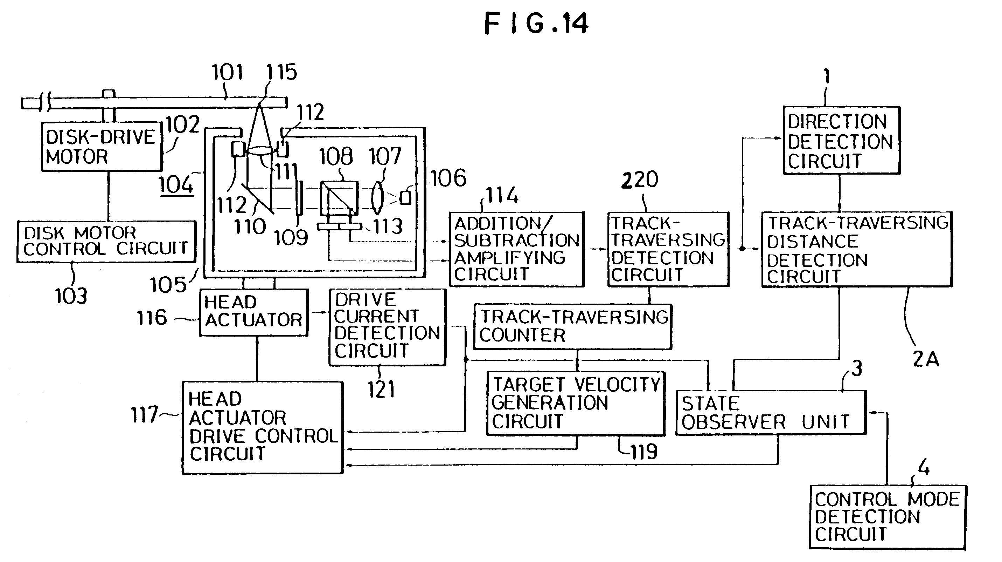

Figure 14 is a block diagram of the optical disk drive device of another embodiment of the invention.

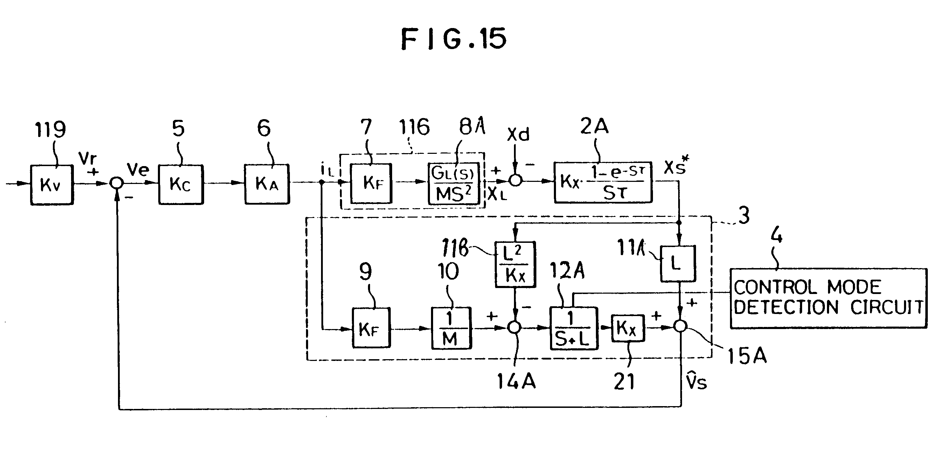

Figure 15 is a block diagram of the velocity-control system incorporated in the optical disk drive device.

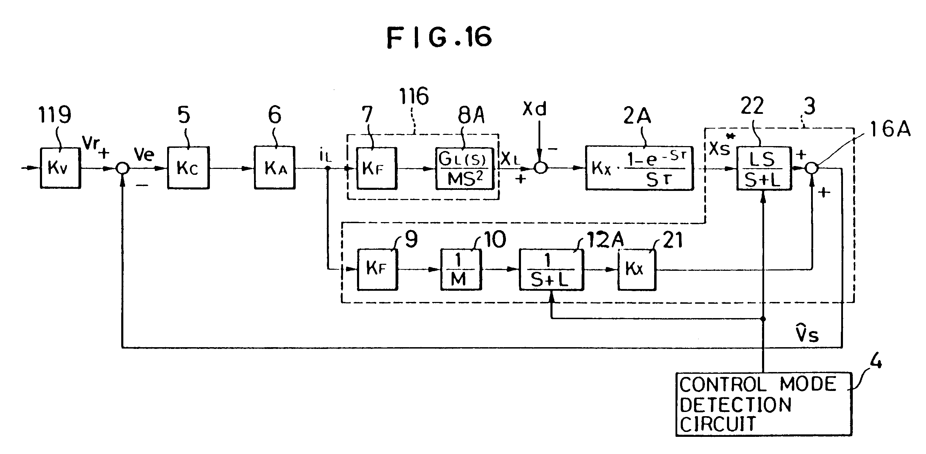

Figure 16 is a block diagram of another velocity-control system which can be built in the same optical disk drive device.

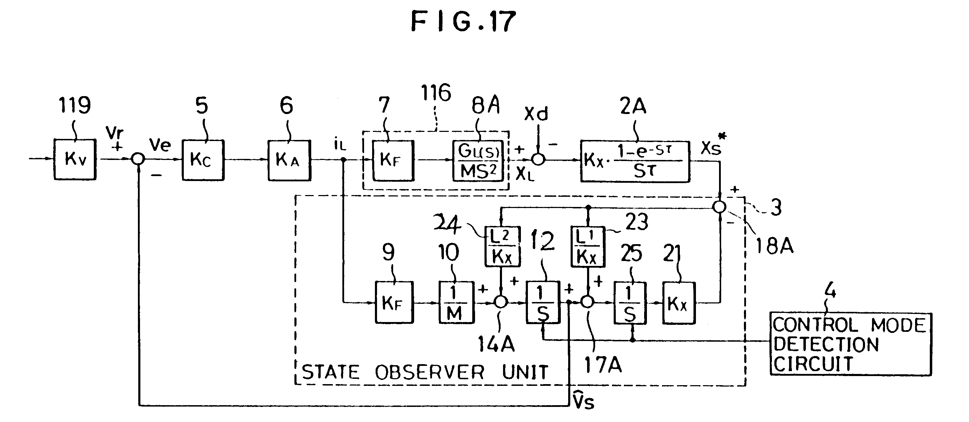

Figure 17 a block diagram of another velocity-control system built in the optical control system.

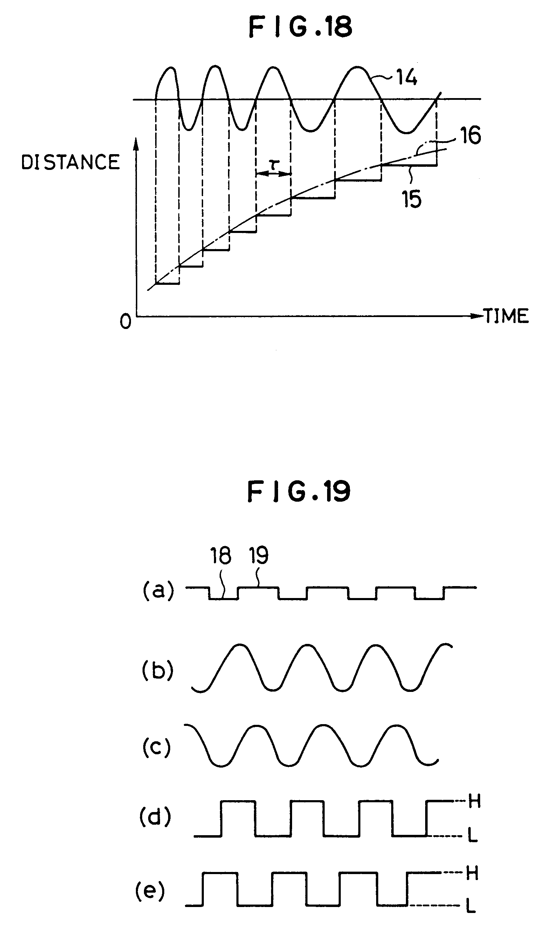

Figure 18 is a diagram which explains the operation of the track-traversing detection circuit in the optical disk drive device.

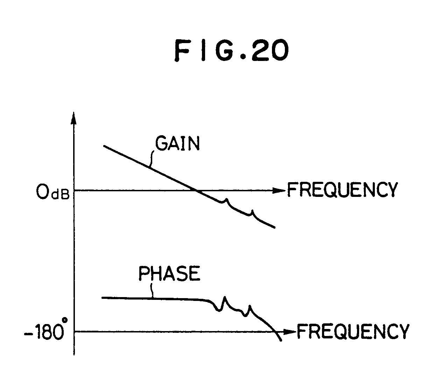

Figure 19 is a diagram which explains the operation of the direction-detection circuit of the optical disk drive device.

Figure 20 is an example of an open-loop transfer characteristics of the velocity-control system of Figure 15.

DETAILED DESCRIPTION OF THE EMBODIMENTS

Figure 7 shows a block diagram of a system of an embodiment of the present invention. In this drawing, reference numerals 10 to 120 designate identical or corresponding elements in the conventional system shown in Figure 1, and their description is omitted in order to avoid duplication of explanation, and the following explanation is concentrated mainly on elements which are different from those shown in Figure 1.

A direction-detection circuit 1 receives the difference signal and the sum signal from the addition/subtraction amplifying circuit 114. On the basis of these signals, the direction detection circuit 1 detects the track traverse direction (direction with which the light spot 115 traverses the tracks). Responsive to an output signal from the direction-detection circuit 1, a polarity switching circuit 2 determines or switches the polarity of an output of the speed-detection circuit 120. A velocity-detection circuit 20 is composed of the direction-detection circuit 1, the speed-detection circuit 120, and the polarity switching circuit 2.

A state-observer unit 3 receives the drive current signal detected by the drive current detection circuit 121, which detects the drive current of a head actuator 116, and a velocity-detection signal which has a polarity appended at the polarity switching circuit 2. On the basis of the above signals, the state-observer unit 3 presumes or estimates the velocity which is closer to the true value. An output signal from the state-observer unit 3 is sent to the head-actuator drive control circuit 117.

When a light spot 115 moves along the center of the track, a control-mode detection circuit 4 generates a command which resets an integrator 12 in the state-observer circuit 3.

Figure 8 is a transfer-function block diagram showing the velocity-control system of Figure 7. In this drawing, the state-observer unit 3, the control-mode detection circuit 4, and the velocity-detection circuit 20 correspond to those of Figure 7. In addition, a gain-compensation circuit 5, a force constant 7 of the head actuator, and block 8 are the same as those in Figure 8.

5

The state-observer unit 3 is comprised of gain elements 9, 10 and 13, a feedback gain element 11, an integrator 12, a subtractor 14 and an adder 15.

The gain element 9 has a gain $K_F$ equivalent to the force constant 7 of the head actuator 116, receives the drive current which is detected in the head actuator drive circuit 6, and outputs an estimated value of the drive force. The gain element 10 has a gain 1/M which is the reciprocal of the mass of the movable parts of the head actuator 116 and the optical head 104 which are movable at the time of access. The output of the gain element is an estimated value of acceleration of the head. The subtractor 14 determines the difference between the detected velocity $V_S{}^*$ from the velocity detection circuit 20 and the output of the gain element 13, which is the estimated track traverse velocity $\widehat{V}_S$, as will be apparent from the subsequent description. The feedback gain element 11 receives the output of the subtractor 14. The adder 15 determines the sum of the estimated acceleration from the gain element 10 and the output of the feedback gain element 11. The integrator 12 integrates the sum as output from the adder 15. The integrator 12 is reset by an output from the control-mode detection circuit 4. The gain element 13 simulates the velocity-detection circuit 20 and its output is the estimated velocity signal $\widehat{V}_S$.

Of the above described elements, the gain elements 9 and 10 in combination form a means for simulating the blocks 7 and 8, i.e., nominal characteristics of the head actuator 116. The output of the gain element 10 is a simulation of the acceleration of the optical head. The feedback gain element 11, the integrator 12, the gain element 13, the subtractor 14 and the adder 15 in combination form a means for combining the output of the simulating means (9 and 10), and the detected velocity $V^*$. Simply stated, its output, which is the estimated velocity, is given as the sum of the detected-velocity $V_S{}^*$ (which is updated each time traverse of a track is detected) and an estimated head velocity (as obtained by the simulation by the use of the gain elements 9 and 10 and the subsequent integration by the integrator 12). For low frequency components, the detected-velocity $V_S{}^*$ is dominant, i.e., $\widehat{V}_S \sim V_S{}^*$. For high frequency components, the estimated value of the head velocity is dominant, i.e., $\widehat{V}_S \sim \widehat{V}_L$. This will be later described in further detail.

Figure 9 shows waveforms of signals appearing at various parts of the velocity-control system. Reference numeral 14 designates a track-traversing sensor signal obtained from the output of addition/subtraction amplifying circuit 114 of Figure 7. Reference numeral 15 designates an output signal (detected velocity signal) $V_S{}^*$ of the velocity-detection circuit 20. Reference numeral 16 designates an estimated velocity signal $\widehat{V}_S$ at the output of state-observer unit 3. Reference numeral 17 designates an estimated velocity signal $\widehat{V}_S$ which appears on the output of the state-observer unit 3, in the case when the gain of feedback gain element of Figure 8 is equal to zero (L = 0).

Figure 10 shows the relationship between track grooves and the detected signals. Figure 10(a) is a cross-sectional view of an optical disk. In this drawing, reference numeral 18 designates a groove portion and 19 designates portion between the grooves. Figure 10(b) shows a difference signal (tracking error signal) from the addition/subtraction amplifying circuit 114 of Figure 7. Figure 10(c) illustrates a sum signal (information signal) from the addition/subtraction amplifying circuit 114. Figure 10(d) and Figure 10(e) are respective comparator signals (which are obtained by digitizing the analog signals shown in Figure 10(b) and 12(c) into binary signals.

Figure 11 shows respective open-loop transfer characteristics of the control system shown in Figure 8, representing the frequency characteristics of the gain and phase.

In the optical disk drive device as described above, light which is emitted from a light source 106 is collimated by the collimator lens 107, passes through a polarization beam splitter 108 so that the light emitted therefrom is linearly polarized, passes through a λ/4 plate, is reflected by a mirror 110, and is then converged by an objective lens 111 into a light spot 115 on the surface of the optical disk 101 rotating at a steady speed.

The light reflected from the optical disk 101 passes through the objective lens 111, is reflected at the polarization beam splitter 108, and is sent to a split-photodetector 113.

The light received by the split-photodetector unit 113 is photo-electrically converted by the split-photodetector 113 into electrical signals. In the addition/subtraction amplifying circuit 114, the electrical signals from the split-photodetector 113 are added and subtracted to form the sum signal (information signal) and the difference signal (tracking-error signal).

At the time of access, the sum signal and tracking error signal are sent to the inputs of the track-traversing counter 118, the speed-detection circuit 120, and the direction-detection circuit 1.

As the direction-detection circuit 1 detects the track-traverse direction, i.e., whether the light spot 115 is moved outward (toward the periphery of the disk) or inward (toward the center of the disk), the polarity is determined or switched in the polarity switching circuit 2. After the switching of the polarity, the signal is supplied as a detected velocity signal to the input of the state-observer unit 3. Simultaneously, the drive current signal of the head actuator 116 which is detected by the drive current detection circuit 121 is also input to the state-observer unit 3.

Furthermore, at this moment, an output signal of the control-mode detection circuit 4 clears the reset of the integrator 12 in the state-observer unit 3, so that the state-observer unit 3 is activated.

Meanwhile, an output signal of track-traversing counter 118 is transmitted to the target-velocity generation circuit 119 and the output of the target-velocity-speed generation circuit 119 forms a signal which corresponds to the target velocity related to the number of the remaining tracks (tracks to be traversed to reach the target track).

The head-actuator drive control circuit 117 receives the output signals from the target-velocity generation circuit 119, the state-observer unit 3, and the drive current detection circuit 121. On the basis of these signals, the head-actuator drive control circuit 117 controls the operation of the head actuator 116, and hence, the track traverse velocity.

Operation of the state-observer unit 3 will now be described with reference to Figure 8 and Figure 9. An output signal of the gain-compensation circuit 5, which determines the frequency-band, i.e., the operating range of the velocity-control system, comprises the drive command signal of the head actuator 116. This signal is converted into a drive current in the head-actuator drive circuit 6, which produces a drive force by multiplication with a force constant $K_F[N/A]$ in the head actuator 116 into force constant. The drive force in turn produces an acceleration by multiplication with a factor $1/M$ which is the reciprocal of the mass. The acceleration is integrated and affected, in the high-frequency band, by the resonance characteristics $G_L(S)$ of the head actuator 116. As a result, the head actuator 116 is moved at a head velocity $V_L$.

Due to eccentricity of the optical disk 101, for example, the tracks may fluctuate with respect to a stationary structure, such as a frame of the optical disk drive device, not illustrated as such. In such a case, the track traverse velocity is then equal to the difference between the head velocity $V_L$ and the track fluctuation velocity Vd (the velocity with which the track fluctuates). This velocity is detected in the velocity-detection circuit 20, and is converted into an electrical signal by multiplication with a gain which comprises a velocity-detection sensitivity $K_v[Vm/s]$.

The detected-velocity signal 15, which is obtained by detection from the tracking periods of the track-traversing sensor signal 14, which comprises an output of the addition/subtraction amplifying circuit 114 (Figure 9), is not obtained until track traverse is first detected, and is thereafter obtained as an average velocity of traverse over the preceding half-track. During deceleration, the detected-velocity signal 15 is in the form of steps as illustrated. It thus has a zero-order hold characteristics shown in the speed detection circuit 120 (Figure 6). As the velocity is lowered, the track traverse period $\tau$ is longer.

The state-observer unit 3 comprises an electronic circuit which simulates the nominal transfer characteristics of the head actuator 116 and the velocity-detection circuit 20, i.e., transfer characteristics disregarding the high-frequency band resonance characteristic $G_L(S)$ of the head actuator 116 and the zero-order hold characteristic $(1-e^{-S\tau})/S\tau$ of the velocity-detection circuit 20.

In the state-observer unit 3, the drive current signal $I_L$ of the head actuator 116, which is detected in the drive current detection circuit 6, is converted through the gain elements 9 and 10 into the acceleration information. The adder 15 adds the acceleration information from the gain element 10 to the output of the feedback gain element 11, and the sum is passed through the integrator 12 and then the gain element 13 with a gain $K_V$. The output of the gain element 13 represents the estimated velocity signal $\widehat{V}_S$.

The subtractor 14 determines the difference between the estimated velocity $\widehat{V}_S$ and the detected-velocity $V_S^*$. This difference is multiplied with $L/K_V$ in the feedback gain element 11, and is added to the output of the gain element 10 at the adder 15. The sum is input to the integrator 12, as described before. In this way, the difference between the estimated velocity signal $\widehat{V}_S$ and the detected velocity signal $V_S^*$ is multiplied with a gain $L/K_V$ and added to the acceleration signal, and the sum is input to the integrator 12, thus the estimated velocity $\widehat{V}_S$ and the detected-velocity $V_S^*$ converge toward each other (i.e., approaches each other).

The transfer function from the two input signals to the state-observer unit 3, i.e., the drive current signal $I_L$ and the detected-velocity signal $V_S^*$ to the estimated velocity $\widehat{V}_S$ on the output of the state-observer unit 3, can be expressed as follows:

$$\widehat{V}_S = 1/(S+L) \cdot K_F K_V/M \cdot I_L + 1/(S+L) \cdot V_S^* \qquad (2)$$

More specifically, the transfer function from the drive current signal $I_L$ and to the estimated-velocity signal $\widehat{V}_S$, and the transfer function from the detected-velocity signal $V_S^*$ to the estimated-velocity signal $\widehat{V}_S$, are both of a first-order delay, and their time constant is equal to $1/L$, so the state-observer unit 3 is stable as long as L>0. The value L is a parameter which determines the rate of convergence of the estimated velocity signal $\hat{V}_S$. For example, if converging is to be achieved with the time constant equal to 1 ms, L is selected equal to $10^3$.

The significance of the formula (2) will now be considered for each of the respective frequency-bands. First of all, because $K_F I_L/M$ corresponds to the acceleration of the optical head 104, the following relation holds (if we neglect the terms one or more orders smaller) when the track fluctuation velocity Vd is sufficiently lower than the velocity $V_L$ of the optical head 104:

$$|V_S^*| \mathrel{\tilde{=}} |1/S.K_F K_V/M.I_L| \qquad (3)$$

Substituting $S = j\omega$, the following relations hold.
(i) When $\omega \ll L$ ($|S| \ll L$):

$$\hat{V}_S \mathrel{\tilde{=}} 1/L.K_F K_V/M.I_L + V_S^* \qquad (4)$$

If $L \mathrel{\tilde{=}} 1000$, from the formula (3) one can obtain the following:

$$|V_S^*| \mathrel{\tilde{=}} |1/S.K_F K_V/M.I_L| > |1/L.K_F K_V/M.I_L| \qquad (5)$$

Therefore

$$\hat{V}_S \mathrel{\tilde{=}} V_S^* \qquad (6)$$

(ii) When $\omega \gg L$ ($|S| \gg L$), the following relations holds.

$$\hat{V}_S \mathrel{\tilde{=}} 1/S.K_F K_V/M.I_L + L/S.V_S^* \qquad (7)$$

From formula (3). the following is derived:

$$|L/S.V_S^*| \ll |V_S^*| \mathrel{\tilde{=}} |1/S . K_F K_V/M.I_L| \qquad (8)$$

Therefore,

$$\hat{V}_S \mathrel{\tilde{=}} 1/S.K_F K_V/M.I_L \qquad (9)$$

is obtained.

It is seen from the formulae (6) and (9), that the estimated track-traverse velocity signal $V_S$ is equal to the the detected velocity signal $V_S^*$ in the low-frequency band, while in the high-frequency band, it is equal to an integral of the head-actuator drive current $I_L$. The break point (the boundary between the region in which the estimated track-traverse velocity signal $V_S$ is equal (or about equal) to the detected velocity signal $V_S^*$ and the region in which the estimated velocity signal $V_S$ is equal (or about equal) to an integral of the head-actuator drive current $I_L$ is a frequency L [rad/sec] which coincides with the frequency band of the state-observer unit 3. If, for example, $L = \infty$, the formula (2) will be transformed into the following:

$$\hat{V}_S = V_S^* \qquad (10)$$

The velocity-control system is then identical to a conventional one which is shown in Figure 2 and does not have a state-observer unit. The time response of such a system, $\hat{V}_S$, coincides with the output signal 15 of Figure 11, so it is impossible to compensate for the dead time which occurs in the velocity-detection circuit 20. If, on the contrary, L is equal to 0, then the formula (2) will be transformed into the following expression:

$$\hat{V}_S = 1/S.K_F K_V/M.I_L \qquad (11)$$

Thus, in this case, the time response of the estimated velocity signal $\hat{V}_S$ coincides with the estimated velocity signal 17 in Figure 9, and is not affected by the dead time of the velocity detection circuit 120, and the the high-frequency band resonance characteristics of head actuator 116. However, even a slightest offset superimposed on the drive current $I_L$ will increase the error in the estimated velocity $\hat{V}_S$.

Moreover, the estimated velocity signal $\hat{V}_S$ does not contain the track fluctuation velocity Vd at all. So, the estimated velocity $\hat{V}_S$ is an estimated value for the head velocity $V_L$, rather than the track traverse velocity. When the speed of movement of the head is low, and the head velocity $V_L$ is so low that the track fluctuation velocity Vd cannot be ignored, the error in the estimated velocity signal $\hat{V}_S$ (estimated value) of the track traverse velocity is large.

Thus, by setting the gain L of the feedback gain element 11 to be sufficiently lower than the high-band resonance frequency of the head actuator 116, and the track traverse frequency (the frequency with which the light spot 115 traverses the tracks), and sufficiently higher than the track fluctuation fundamental frequency, the time response of the estimated velocity signal $\hat{V}_S$ can be made as shown by the broken line 16 in Figure 9, which is intermediate between the output signals 15 and 17. Thus, the dead time of the velocity detection circuit 120 can be compensated for to a certain extent.

Because on the basis of formula (2), the transfer characteristic from the detected-velocity signal $V_S{}^*$ to the estimated velocity signal $\hat{V}_S$ can be represented by the characteristic of a first-order low-pass filter represented by $1/(1 + S/L)$, the estimated velocity signal $\hat{V}_S$ will not be disturbed substantially, even when the output signal (i.e., the detected-velocity signal) $V_S{}^*$ is disturbed, e. g., under the effect of recording pits or drop-outs on the optical disk 101.

In addition, by the arrangement in which, during tracking of a track by the light spot 115, the integrator 12 is reset by a command from the control-mode detection circuit 4, and this reset is cleared simultaneously with the switching to the velocity-control mode, since the track-traverse velocity during the tracking is certainly equal to zero, the initial value of the estimated-velocity output signal from the state-observer unit 3 immediately after the switching to the velocity-control mode will not include any error. Moreover, even if an error is present, it will be converged to zero with the time constant 1/L.

The open-loop transfer function of the velocity-control system of Figure 8 can be calculated as follows:

$$G_{02}(S) = K_C K_A K_F K_V/MS.(S + LG_L(S).(1\text{-}e^{-S\tau}))/S\tau /(S + L)$$
$$= K_C K_A K_F K_V/MS.(1 + L/S\; G_L(S)(1\text{-}e^{-S\tau}))/S\tau /(1 + L/S) \qquad (12)$$

If $\omega_L$ designates the frequency at which the high-band resonance characteristic $G_L(S)$ of the head actuator 116 has a peak, then by setting the value of L so that $L \ll \omega_L$ is satisfied, the following relationship holds:

$$\left|L/S.G_L(S)\right|_{S=j\omega_L} = L/\omega_L \left|G_L(j\omega_L)\right| \qquad (13)$$

Therefore, the influence which is exerted by the value of the high-band resonance peaks of the head actuator 116 on the open-loop characteristic of formula (12) will be suppressed to $L/\omega_L$ times ($L/\omega_L \ll 1$), and the high-band resonance peaks of the gain characteristics are as shown in Figure 11, and are smaller than those shown in Figure 6.

It is also different from the frequency characteristic of a notch filter 122 shown in Figure 3 in that the high-band resonance frequency $\omega_L$ will not be required to be a specific value. That is, if the frequency satisfies condition $\omega_L \gg L$, the suppression effect will be obtained at an arbitrary frequency, and even there are a plurality of peaks they are suppressed uniformly. Similar to mechanical resonance characteristic $G_L$-(S), the phase delay and the gain reduction due to the zero-order hold characteristic of the velocity-detection circuit 20 in the formula (12), are also alleviated, and the phase of the open-loop characteristics extends to the high-frequency band, and the stability of the system is improved.

When the light spot 115 traverses the grooves of the tracks as shown in Figure 10(a), the difference signal (Figure 10(b)) and the sum signal (Figure 10(c)) from the addition/subtraction amplifier 114 are 90° shifted relative to each other. Utilizing this fact, it is possible to determine the direction of movement of the light spot, i.e., whether it is moving from the left to the right in Figure 10(a), or from the right to the left in Figure 10(a). That is, if the level of the signal in Figure 10(e) is high when the signal in Figure 10(d) rises, or if the level of the signal in Figure 10(e) is low when the signal in Figure 10(d) falls, the light spot is moving from the left to the right. If, on the contrary, the level of the signal in Figure 10(e) is low when the signal in Figure 10(d) rises, or if the level of the signal in Figure 10(e) is high when the signal in Figure 10(d) falls, the light spot is moving from the right to the left.

If, in the manner described above, the track traverse direction (the direction in which the light spot 115 traverses the tracks) is detected by the direction-detection circuit 1, and the polarity of the output signal of the speed-detection circuit 120 is switched depending on the track-traversing direction, positive feedback is voided and the operation of the velocity-control system will be stable.

Another embodiment of the invention is shown in Figure 12 which is a block diagram similar to Figure 8. In this system, the state-observer unit 3 is slightly modified from the state-observer unit 3 in Figure 8. The transfer function from the detected velocity signal $V_S^*$ and the drive current signal $I_L$ to the estimated velocity signal $\hat{V}_S$, as well as the open-loop transfer function, are also as represented by formulae (2) and (12).

Moreover, although the system shown in Figure 7 has a polarity switching circuit 2 installed directly after the speed-detection circuit 120, what is essential is that the polarity be switched so that the control system has a negative feedback, so that the polarity switching circuit 2 may alternatively be provided directly after the drive-current detection circuit 121 or after the state-observer unit 3.

Furthermore, in the embodiment described above, the track traverse speed and the track traverse direction are detected on the basis of the signals obtained by determining the sum and the difference on the split-photodetector outputs. But they may obtained in other ways. For example, when a sample servo system using an optical disk without track grooves is employed, the track traverse speed and the track traverse direction may be detected on the basis of an output of the tracking signal (tracking error signal) detection means or an output of a track traverse number detection means and an output of a means for detecting a signal corresponding to the reflected-light total-amount signal.

Furthermore, they may be detected from the address information or the like of the optical disk.

In the illustrated embodiments, the polarity of the output signal from speed-detection circuit 120 was switched or determined on the basis of the direction detected in the direction-detection circuit. If, however, the track traverse direction is not reverted during velocity control, or if the time for which the track traverse direction is opposite is short, the estimated velocity signal $\hat{V}_S$ can be determined from the drive current signal $I_L$ alone, by means of formula (9). Therefore, the velocity-control system will never have a positive feedback. Accordingly, as shown in Figure 13, the polarity of the output signal from the speed-detection circuit 120 may be switched at a polarity-switching circuit 2 on the basis of the access-direction command 151 supplied from an access-direction command generator 150, before being supplied to the state-observer unit 3.

In the embodiment of Figure 8, the head actuator was a linear actuator. The head actuator may alternatively be a rotary-type actuator. In this case, the mass M of the movable parts described with reference to Figure 8, Figure 9 and Figure 10 should be replaced by inertia moment J of movable parts. In other words, the head actuator may have any suitable form. The head actuator need not necessarily drive the entire head, and can be used for driving part only of the head. What is essential is that it is capable of moving the light spot over a large distance in the radiation direction of the disk. It may be of such a construction that can serve both as the tracking actuator and the head actuator.

In the embodiment described, the head actuator drive current is input to the state-observer unit. However, what is essential is that an acceleration of the optical head or a parameter related to the acceleration be input and used for the determination of the estimated track traverse velocity.

As has been shown above, according to the configurations described above, the velocity-control system of the optical drive device is provided with a state-observer unit which operates at the time of track-access. This state-observer unit receives an output signal from the velocity-detection circuit and the head-actuator drive current signal. On the basis of these signals, the state-observer unit estimates the track traverse velocity, which is then used for the velocity control. Accordingly, the stability of the velocity control system is improved, and the velocity control is enabled during access over a short distance as well as access over a long distance. The access time is substantially reduced, and the performance of the velocity control system does not depend on the fluctuation of the mechanical resonance frequency of the optical head, or the number of the resonance frequencies. Assembly of the head actuator and the optical head is therefore facilitated.

Figure 14 shows a block diagram of a system in accordance with another embodiment of the present invention. In this drawing, reference numerals Identical to those in Figure 1 designate identical or corresponding elements, and their description is omitted, and the following explanation is concentrated mainly on elements which are different from those shown in Figure 1.

A track-traversing detection circuit 220 receives the difference and sum signals from the addition/subtraction amplifying circuit 114. These signals are used to detect track traverse. A direction-detection circuit 1 receives the output from the track-traverse detection circuit 220 for detecting the track traverse direction. A track-traversing distance detection circuit 2A receives signals from the direction-detection circuit 1 and, on the basis of these signals, counts up or counts down the output signal from the track traverse detection circuit 220.

A state-observer unit 3 receives the drive current signal detected by the drive current detection circuit 121, which detects the drive current of the head actuator 116, and a track-traversing distance detection signal from the track-traversing distance detection circuit 2A. On the basis of the above signals, the state-observer unit 3 estimates the track traverse velocity which is closer to the true value. An output signal from the state-observer unit 3 is sent to a head-actuator drive control circuit 117.

A control-mode detection circuit 4 is a circuit, which then the light spot 115 is following the center of a track, outputs a command for resetting an integrator which is built in the state-observer unit 3.

Figure 15 shows a transfer-function block diagram of the velocity-control system of Figure 14. In Figure 15, the state-observer unit 3, the control-mode detection circuit 4, and the track-traversing distance detection circuit 2A correspond to the elements designated with the same reference numerals in Figure 14. In addition, a gain-compensation circuit 5, a head-actuator drive circuit 6,and a force-constant block 7 of the head actuator, are the same as those in Figure 2 and mechanical - resonance-characteristic block 8A corresponding to the mechanical-resonance-characteristic block 8 in Figure 2.

The state-observer unit 3 is comprised of gain elements 9, 10 and 21, feedback gain elements 11A and 11B, a first-order delay element 12A, a subtractor 14A and an adder 15A.

The gain element 9 has a gain $K_F$ equivalent to the force constant (block 7) of the head actuator 116, receives the drive current signal detected in the head actuator drive circuit 6, and outputs an estimated value of the drive force. The gain element 10 has a gain 1/M which is the reciprocal of the mass of the movable part of the head actuator 116, the optical head 104, and the like movable at the time of access. The feedback gain elements 11A and 11B receive a track-traversing distance detection signal $X_S^*$from the track-traversing distance detection circuit 2A.

The subtractor 14A subtracts the output of the feedback gain element 11B from the output of the gain element 13. The output of the subtractor 14A is an estimated value which is closer to the true acceleration and is input to the first-order delay element 12A. The first-order-delay element 12A can be reset by an output signal from the control-mode detection circuit 4.

The gain element 21 simulates a track-traversing distance detection circuit 2A. The adder 15A adds the output signal from the feedback gain element 11 and the output signal from the gain element 21, and the sum is obtained at an adder 15A appears on the output of the state-observer unit 3 to serves as an estimated velocity signal $\widehat{V}_S$.

Figure 16 shows another embodiment of a state-observer unit 3, which is a modification equivalent to the state-observer unit 3 in Figure 15. In Figure 16, reference numerals identical to those in Figure 15 designate identical or corresponding elements. In this embodiment, the output from the gain element 21 and the output of an arithmetic element 21 are added at an adder 16A, and the sum, forming the estimated-velocity signal $\widehat{V}_S$, is produced on the output of the state-observer unit 3. Similar to the case with first-order delay element 13, a predetermined part of the arithmetic element 22 can be reset by means of an output signal from the control-mode detection circuit 4.

Figure 17 is block diagram shoring transfer functions in a further embodiment of the velocity-control system of Figure 14, which is expressed differently from that shown in Figure 15. Particularly, the state-observer unit 3 is in a different form from those in Figure 15 and Figure 16. In Figure 17, reference numerals identical to those in Figure 15 designate identical or corresponding elements. Reference numeral 23 designates a feedback gain element 23, and reference numerals 12 and 24 designate integrators which are reset by the control-mode-detection circuit 4.

Figure 18 shows waveforms which appear at various parts during velocity control. Reference numeral 14 designates a track-traversing sensor signal obtained at the output of addition/subtraction amplifying circuit 114 of Figure 14. Reference numeral 15 designates an output signal (track-traversing distance detection signal) $X_S^*$ of the track-traversing distance detection circuit 2A. Reference numeral 16 designates a true track-traversing distance, which is not detected in reality.

Figure 19 shows a relationship between the track grooves and the detected signals. Figure 19 (a) is a cross-sectional view of an optical disk. In this drawing, reference numeral 18 designates a groove portion and 19 designates a portion between the grooves. Figure 19(b) shows a difference signal (tracking error signal) from the addition/subtraction amplifying circuit 114 of Figure 14. Figure 19(c) illustrates the sum signal from the addition/subtraction amplifying circuit 114, and Figure 19(d) and Figure 19(e) are respective comparator signals for those shown in Figure 12(b) and Figure 12(c).

Figure 20 shows the open-loop transfer characteristics of the velocity control system shown in Figure 15, showing the frequency characteristics of the gain and phase.

11

The system described above operates in the following manner:

A light which is emitted from the light source 106 is collimated by a collimator lens 107, passes through a polarization beam splitter 108. The output of the polarization beam splitter 108 is a linearly polarized light and is passed through a λ /4 plate, is reflected by a mirror 110, and is then focused by an objective lens 111 into a light spot on the surface of an optical disk 101 which is rotating steadily.

The light reflected from the optical disk 101 passes through the objective lens 111 to the polarization beam splitter 108, where the light is reflected, and incident onto a split-photodetector 113.

The light received by the split-photodetector 113 is photoelectrically converted into electrical signals. The electrical signals are then combined (added and subtracted) at the addition/subtraction amplifying circuit 114, into the sum signal and the tracking error signal.

At the time of tracking, the sum signal and the tracking error signal are passed through the track traverse detection circuit 20, and the direction detection circuit 1, to the track-traversing distance detection circuit 2A and the track traversing counter 118.

The pulsative track traverse detection signals output from the track traverse detection circuit 20 are accumulated positively (added) or negatively (subtracted) at the track-traversing distance detection circuit 2A, depending on whether the track traverse direction is outward (toward the outer periphery) or inward (toward the axis), the track traverse direction being detected by the detector 1. The result of the accumulation is input to the state-observer unit 3.

For example, during outward access when the light spot 115 is moved outward, the pulsative track traverse detection signals are counted up by a suitable counter. During inward access when the light spot 115 is moved inward, the pulsative track traverse detection signals are counted down. In this way, the desired total track-traversing distance (as represented by the total number of tracks traversed) is detected.

At the same time, the drive current signal of the head actuator 116 as detected by the drive current detection circuit 121 is also input to the state-observer unit 3.

The resetting of the integrator in the state-observer unit 3 is then cleared by the output of the control mode detection circuit 4, so that the state-observer unit 3 can operate.

The output of the track-traversing counter 118 is transmitted to the target velocity generation circuit 119 from which a target velocity corresponding to the remaining number of tracks is output.

In accordance with the the output from the target-velocity generation circuit 119, the output from the state-observer unit 3, and the output from the drive current detection circuit 121, the head-actuator drive control circuit 117 controls the operation of the head actuator 116, and hence, the track traverse velocity.

Operations of the state-observer unit 3 will now be described with reference to Figure 15, Figure 16 and Figure 17. An output signal of the gain-compensation circuit 5, which determines the frequency-band, i.e., the operating range of the velocity-control system, corresponds to a drive command signal for the head actuator 116. This signal is converted into a drive current in the head-actuator drive circuit 6, which is multiplied with the force constant $K_F[N/A]$ in the head actuator 116 into the drive force, which is multiplied with 1/M, which is the reciprocal of the mass, into acceleration. The acceleration is integrated into velocity, and the velocity, in turn, is integrated into a distance.

When the above-mentioned frequency-band of the velocity control system is in the high-frequency zone, there is also an influence of the high frequency-band resonance characteristic $G_L(S)$ of the head actuator 116. Thus, the head actuator 116 will move for a certain distance $X_L$.

When there is a track fluctuation $X_d$ due for example to the eccentricity of the optical disk 101, the difference between $X_L$ and $X_d$ will correspond to the track-traversing distance. This distance is detected by the track-traversing detection circuit 2A and is converted, by being multiplied with gain $K_X[V/m]$, which is the sensitivity, into an electrical signal.

As shown in Figure 18, the track-traversing distance signal 15, which is detected on the basis of the the tracking period of the track-traversing sensor signal 14, output from the addition/subtraction amplifying circuit 114, is obtained when a track traverse is detected, as an average traverse velocity over immediately preceding half a track. During deceleration, the track traverse velocity signal is therefore stepwise, and has a zero-order hold characteristics, as shown at the block 2A in Figure 15. As the track traverse velocity is lowered, the track traverse period becomes longer. The value of $\tau$ is smaller during high velocity operation, and is larger during low velocity operation.

Basically, the state-observer unit 3 comprises electronic circuits which simulate the transfer characteristics of the head actuator 116 and the track traversing distance detection circuit 2A, excepting the high frequency-band resonance characteristics $G_L(S)$ of the head actuator 116 and the zero-order hold characteristic $(1-e^{-S\tau})/S\tau$ of the track-traverse-distance detection circuit 2A.

12

In the state-observer unit 3 shown in Figure 15, the drive current signal $I_L$ of the head actuator 116, which has been detected in the drive-current detection circuit 6, is converted through the gain elements 9 and 10 into acceleration information.

The subtractor 14A determines the difference between the acceleration information and the output of the feedback gain element 12 which receives the detected track-traverse distance $X_S^*$, and the difference is then passed through the first-order delay element 13 and the gain element 21, into a velocity signal. At the adder 15A, the velocity signal is added to the output of the gain element 11 which also receives the detected track-traverse distance $X_S^*$. The resultant sum signal is the estimated velocity $\hat{V}_S$.

The transfer function from the two inputs to the state-observer unit 3, i.e., the drive current $I_L$ of the head actuator, and the track-traversing distance $X_S^*$, to the output of the state-observer unit 3, i.e., the estimated velocity $\hat{V}_S$ can be expressed as follows:

$$\hat{V}_S = \frac{1}{S+L} \frac{K_F K_V}{M} I_L + \frac{LS}{S+L} X_S^* \qquad (22)$$

More specifically, because the time constant of the transfer characteristics from the drive current signal $I_L$ to estimated velocity signal $\hat{V}_S$, as well as from the track-traversing distance signal $X_S^*$ to the estimated velocity signal $\hat{V}_S$ is equal to $1/L$, provided that $L > 0$, the state-observer unit 3 is stable, Value L is parameter which determines the rate of convergence of the estimated velocity signal $\hat{V}_S$. For example, if the convergence is to be performed with the time constant equal to 1 ms, L is selected equal to $10^3$.

Considered below is the significance of the formula (22) for the respective frequency-bands. First of all, because $K_F I_L / M$ corresponds to the acceleration of the optical head 104, if the terms one or more orders smaller may be neglected, the following relation (23) holds provided that the track fluctuation value $X_d$ is sufficiently smaller than the movement distance $X_L$ of the optical head 104.

$$|SX_S^*| \simeq |\frac{1}{S} \frac{K_F K_V}{M} I_L| \qquad (23)$$

Substituting $S = j\omega$
(I) If $\omega \ll L$ ($|S| \ll L$),

$$\hat{V}_S \simeq \frac{1}{L} \frac{K_F K_V}{M} I_L + SX_S^* \qquad (24)$$

If $L \simeq 1000$, from formula (23) one can obtain the following:

$$|SX_S^*| \simeq |\frac{1}{S} \frac{K_F K_V}{M} I_L| \gg |\frac{1}{L} \frac{K_F K_V}{M} I_L| \qquad (25)$$

Therefore

$$\hat{V}_S \simeq SX_S^* \qquad (26)$$

(II) If $\omega \gg L$ ($|S| \gg L$),

$$\hat{V}_S \simeq \frac{1}{S} \frac{K_F K_V}{M} I_L + LX_S^* \qquad (27)$$

13

From formula (23), the following is derived:

$$|LX_S{}^*| \ll |SX_S{}^*| \underset{=}{\sim} \frac{1}{S} \frac{K_F K_V}{M} I_L|$$

$$(28)$$

Therefore,

$$\hat{V}_S \underset{=}{\sim} \frac{1}{S} \frac{K_F K_V}{M} I_L$$

$$(29)$$

is obtained.

It is seen from formulae (26) and (29), that the estimated velocity signal $\hat{V}_S$ is equal to the differential value $SX_S{}^*$ of the track-traversing distance detection signal $X_S{}^*$ in the low frequency-band, and is equal to the integral of the head-actuator drive current $I_L$ in the high frequency-band. Thus, the frequency forming the boundary between the above-mentioned high and low frequency-bands is L [rad/sec] which coincides with the frequency band of the state-observer unit 3. If, for example, if is it assumed that L = ∞ , formula (22) will be transformed into the following:

$$\hat{V}_S = SX_S{}^* \qquad (30)$$

Because in this case, the drive current $I_L$ is not used for the determination of the estimated velocity $\hat{V}_S$, and the estimated velocity signal $\hat{V}_S$ is given by the differential of the track-traversing distance signal $X_S{}^*$, the dead time developed in track-traversing distance detection circuit 2A could not be compensated, If, on the contrary, L is assumed equal to 0, then formula (22) will be transformed into the following expression:

$$\hat{V}_S = \frac{1}{S} \frac{K_F K_V}{M} I_L$$

$$(31)$$

Because in this case, the track-traversing distance signal $X_S{}^*$ is not used for the determination of the estimated velocity $\hat{V}_S$, so there is no adverse effect from the dead time of the track-traversing detection circuit 2A or the high resonance-frequency characteristics of the head actuator 116. However, even a slightest offset in the drive current $I_L$ will increase the estimation error of the estimated velocity signal $\hat{V}_S$.

Since the estimated velocity signal $\hat{V}_S$ does not include the track fluctuation amount Xd at all, the estimate velocity is comprised of an estimated value of the velocity of movement of head actuator 116, rather than the track traverse velocity. When the head velocity is low, and the head velocity $V_L$ becomes so low that the track fluctuation velocity Vd cannot be ignored, an error which is caused in the estimated velocity signal $\hat{V}_S$ becomes substantial.

Thus, by setting the parameter L to be sufficiently lower than the high frequency-band resonance frequency of the head actuator 116 and the track traverse frequency, and sufficiently higher than track fluctuation fundamental frequency, the estimated velocity signal $\hat{V}_S$ can be made to a assume a value which is midway between the value given by formula (26) ad the value given by the formula (29), and the dead time due to the track-traversing distance detection circuit 2A can be compensated to a certain extent.

On the basis of formula (22), the transfer characteristics from the differential value $SX_S{}^*$ of the track-traversing distance signal $X_S{}^*$ to the estimated-velocity signal $\hat{V}_S$ can be represented by the characteristic of a first-order low-pass filter, i.e., 1/(1 + S/L), the estimated velocity signal $\hat{V}_S$ will not be disturbed substantially even if $SX_S{}^*$ corresponding to the detected-velocity signal is disturbed, e.g., under the effect of recording bit or drop-outs on the optical disk 101.

Figure 16 is another modification which is an equivalent conversion from that shown in Figure 15. Because in both cases the transfer characteristics of the state-observer unit 3 are equivalent, the description of operation of the modified system is omitted.

14

Figure 17 shows a block-diagram of the velocity-control system which incorporates the state-observer unit 3 of another modification. In this modification, the gain elements 9, 10 and 21, and the integrator elements 24 and 25 simulate the transfer characteristics of the track-traversing distance detection circuit 2A and the head actuator 116, which is the object of control. In Figure 17, the drive current $I_L$ of the head actuator 116 is converted by the gain elements 9 and 10 into an acceleration, and then into a velocity signal by the integrator element 24, and then into a distance (over which the head has been moved or displaced) by the integrator element 25 and the gain element 21. The difference between the displacement-distance signal and output signal $X_S{}^*$ of the track-traversing distance detection circuit 2A is determined by a subtractor 10A, and is then sent through respective feedback gain elements 12 and 23 to adders 14A and 17A where they are added to the outputs of the gain element 10 and the integrator element 24. The outputs of the adders 14A and 17A are inputs to the integrator elements 24 and 25. In this way, the desired velocity control is achieved. In other words, the acceleration and velocity are corrected such that the estimated value of the track-traversing distance converges toward the track-traversing distance detection signal $X_S{}^*$, and the signal that is obtained by integrating the corrected acceleration signal in the integrator element 24 is the estimated velocity $\hat{V}_S$. For the system of Figure 17, the transfer characteristic from the track-traversing distance detection signal $X_S{}^*$ and the drive current $I_L$ of the head actuator 116 to the estimated velocity $\hat{V}_S$ can be represented by the following formula:

$$\dot{V}_S = \frac{S+L_1}{S^2+L_1 S+L_2}\ \frac{K_F}{M}\ I_L\ +\ \frac{L_2 S}{S^2+L_1 S+L_2}\ X_S{}^*\qquad (32)$$

Similar to the cases of Figure 15 and Figure 16, if the boundaries between the frequency-bands is denoted by $\sqrt{L_2}$ of the state-observer unit 3 will be approximately as follows:

(I) When $\omega \ll \sqrt{L_2}$, $V_S \underset{\sim}{\sim} SX_S$

and

(II) When

$$\omega\ \gg\ \sqrt{L_2},\ \dot{V}_S\ \underset{\sim}{\sim}\ \frac{K_F}{MS}\ I_L$$

Thus, in the case of Figure 17, the effects will be the same as in the systems of Figure 15 and Figure 16.

Because the state-observer unit 3 of Figure 17 has in general the same order (i.e., the same number of integrator elements) as the head actuator 116, it may be called a "same-order state-observer unit". As compared to this, the state-observer unit 3 of Figure 15 and Figure 16 have the order one less than the head actuator 116, and therefore they can be called "minimum-order state-observer units". It is also known that by means of the so-called Gopinath method, the same-order state-observer unit of Figure 17 can be converted into a minimum-order state-observer unit of the state-observer unit of the type shown in Figure 15 and Figure 16.

In addition, during tracking of the tracks by the light spot 115, the integrator elements 13, 22, 24, and 25 (which are shown in Figure 15 to Figure 17) are reset by a command from the control-mode detection circuit 4, This resetting is cleared simultaneously with the switching into the velocity-control mode. Since the track-traverse velocity during the tracking is certainly equal to zero, there will be no error in the initial value of the estimated velocity output from the state-observer unit 3 at the time immediately after the transition into the velocity-control mode. Moreover, even if an error occurs, the error is will be reduced to zero with the time constant $1/L$ or $1/\sqrt{L_2}$.

The open-loop transfer functions of the velocity control system shown in Figure 15 can be obtained by calculation in accordance with the following formula:

$$G_{02}(S) = \frac{K_C K_A K_F K_V}{MS} \cdot \frac{S + L \cdot G_L(S) \cdot \dfrac{1 - \theta^{-S\tau}}{S\tau}}{S + L}$$

$$= \frac{K_C K_A K_F K_V}{MS} \cdot \frac{1 + \dfrac{L}{S} G_L(S) \dfrac{1 - e^{-S\tau}}{S\tau}}{1 + \dfrac{L}{S}}$$

$$\ldots (33)$$

If the high-band resonance characteristic $G_L(S)$ of the head actuator 116 has a peak at a frequency $\omega_L$, by setting L to satisfy $L \ll \omega_L$, then the following relation holds:

$$\left| \frac{L}{S} G_L(S) \right| \; S = j\omega_L = \frac{L}{\omega_L} |G_L(j\omega_L)| \qquad (34)$$

The influence which is exerted by the value of the high frequency-band resonance peak of the head actuator 116 on the open-loop characteristic of formula (33) will be suppressed to $L/\omega_L$ times ($L/\omega_L \ll 1$), and as shown in Figure 20, the high frequency-band peaks of the gain characteristics will be smaller than those shown in Figure 6.

The resultant characteristics is also different from the frequency characteristic of a notch filter 122 shown in Figure 4, and the high-band resonance frequency $\omega_L$ need not be a specific frequency. Generally, if the frequency satisfies condition $\omega_L \ll L$, the suppression effect will be obtained at an arbitrary frequency, and will be uniform even in the presence of several peaks. Similar to mechanical resonance characteristic $G_L(S)$, the phase delay and the gain drop due to the zero-order hold characteristic of the track-traversing distance detection circuit 2A, in formula (33) are alleviated. Therefore, the phase of the open-loop characteristics extends to the high band, and the stability of the system is improved.

The method of detecting the track-traverse direction by the direction detection circuit 1 is similar to that described with reference to Figure 10. Responsive to the detected track-traversing direction, the polarity of the track-traversing detection signal of the track-traversing distance detection circuit 2A is switched, and accumulated positively (counted up) or negatively (counted down). Thus, a positive feedback of the control system is avoided, and a stable operation is ensured.

In the above-described embodiment, the track-traversing distance detection circuit switches the polarity of the track-traversing signal and performs the positive or negative accumulation on the basis of the detected track traverse direction. Where, during velocity control, reversal of the track traverse direction does not occur or occurs only for a short period, and because, as shown by formula (29), the estimated velocity is determined substantially by the drive current, $I_L$, the positive feedback does not take place in the velocity-control system, the direction detection circuit may be omitted.

In the embodiments of Figure 15, Figure 16 and Figure 17, the head actuator was a linear actuator which moves linearly. The head actuator may alternatively be a rotary-type actuator. In this case, the mass M of the movable parts should be replaced by inertia moment J of movable parts. Where the optical head is a separate type in which part only of the optical head is movable, the head actuator may be designed to move the movable part of the optical head, What is essential is that it is capable of moving the light spot over a large distance in the radiation direction of the disk. It may be of such a construction that can serve both as the tracking actuator 112 (in Figure 15) and the head actuator.

In the embodiments described, a drive current detection means is used for detecting the acceleration of the head actuator. But the acceleration may alternatively be detected by an acceleration sensor attached to the movable part of the head, and its output may be supplied to the state-observer unit.

Furthermore, in the embodiments described above, the track traverse speed and the track traverse direction are detected on the basis of the signals obtained by determining the sum and the difference on the split-photodetector outputs. But they may obtained in other ways. For example, when a sample servo system using an optical disk without track grooves is employed, the track traverse speed and the track traverse direction may be detected on the basis of an output of the tracking signal (tracking error signal) detection means or an output of a track traverse number detection means and an output of a means for detecting a signal corresponding to the reflected-light total-amount signal.

Furthermore, they may be detected from the address information or the like of the optical disk.

As has been shown above, the velocity-control system of the optical disk drive device described above is provided with a state-observer unit. At the time of track access, the track-traversing detection signal from the track-traversing distance detection circuit is integrated with its polarity changed under the effect of the output from the direction-detection circuit. This signal and the drive current signal of the head actuator are then input to the state-observer unit, which estimates the track-traversing velocity, and the actual track-traversing velocity of the light spot is controlled on the basis of the above-mentioned estimation. Such a velocity-control system is characterized by an improved stability of operation and provides, at the time of access, reliable velocity control with long distances. It is also possible to achieve velocity control with extremely short traversing distances. The system makes it possible to considerably reduce the access time.

The above configuration is efficient because the performance of the velocity-control system do not depend on such factors as manufacturing fluctuations of the mechanical resonance frequencies and the number of the mechanical resonance points of the head actuator and the optical head. Accordingly, the assembly of the head actuator and the optical head is facilitated.

**Claims**

1. An optical disk drive device comprising:

   an optical head (104) which forms a light spot on an optical disk (101) with multiple tracks, and includes a photodetector (113) which receives light reflected from said tracks and provides a photoelectric conversion signal, and a movable part including a lens (111) for focusing said light spot on said optical disk;

   a head actuator (116) which is connected to said optical head and which, when said optical head accesses said tracks of said optical disk, moves said movable part in a radial direction of said optical disk;

   a motion detection means (20, 2A) which is connected to said photodetector (113) and which receives said photoelectric conversion signal produced by said photodetector and produces as output a track-traverse motion signal representing the track-traverse motion of said light spot;

   a target velocity generating means (119) for generating a track-traverse target velocity; and

   a head actuator drive circuit (*117) connected to said target velocity generation means for controlling said head actuator; characterised by

   an acceleration detecting means (121) for detecting the acceleration of said head actuator and producing an output signal representative thereof; and

   a state-observer means (3) which is connected to said acceleration detecting means (121) and said motion detecting means (20, 2A) and produces as output an estimated track-traverse velocity of said light spot based on the output signals from said acceleration detecting means (121) and said motion detecting means (20, 2A) which output is delivered to the head actuator drive circuit to control said head actuator such that the estimated velocity coincides with said target velocity.

2. A device according to claim 1, wherein a cut-off frequency of said state-observer means (3) is lower than a mechanical-resonance frequency of said head actuator (16) or said optical head (104) and the track-traversing frequency of the light spot, but higher than a track fluctuation fundamental frequency.

3. A device according to claim 1 or 2, and further comprising a control mode detection means (4) connected to said state-observer means (3), and said state-observer means includes an integrator (12, 24) which is reset by an output signal from said control mode detection means during tracking of said tracks by said light spot.

4. A device according to any one of claims 1 to 3, wherein said acceleration detection means takes the form of means (121) for detecting the drive current of said head actuator.

**5.** A device according to any one of claims 1 to 4, wherein said head actuator (116) is a linear actuator.

**6.** A device according to any one of claims 1 to 5, wherein said state-observing means comprises:

a simulator (9,10,12,13,21,22,23,24,25) for simulating the nominal transfer characteristics of the head actuator; and

means (11,14,15,11A,11B,12A,14A,16A,22,17A,18A,23,24) for combining the output of said track-traverse motion detector and said simulator to produce said estimated track-traverse velocity.

**7.** A device according to claim 6, wherein said combining means comprises:

a subtractor (14) receiving the detected-velocity from the velocity-detection circuit;

a feedback gain element (11) receiving the output of the subtractor;

an adder (15) adding the output of the feedback gain element (11) and the output of said simulator and producing the sum;

an integrator (12) for integrating the sum output from the adder (12); and

a gain element (13) receiving the output of the integrator (12);

said subtractor (14) also receiving the output of said gain element (13) and determining the difference between said estimated velocity and the output of said gain element (13); and

the output of said gain element (13) being the estimated track-traverse velocity.

**8.** A device according to claim 6, wherein said combining means comprises:

a feedback gain element (12) receiving the detected distance from the distance detection means;

a subtractor (14A) determining the difference between the output of the feedback gain element (12) and the output of said simulator;

a first-order delay element (13) receiving the output of said subtractor (14A);

a gain element (21) receiving the output of said first-order delay element (13);

a feedback gain element (11) receiving the detected distance from the distance detection means; and

an adder (15A) for adding the output of the feedback gain element (11) and the output of the gain element (21);,

the output of said adder (15A) being the estimated track-traverse velocity.

**9.** A device according to any one of claims 1 to 8, wherein said motion detection means (20) detects the velocity of said movable part of said optical head.

**10.** A device according to any one of claims 1 to 8, wherein said motion detection means (2A) detects the distance over which said movable part of said optical head has been moved across the tracks.

**Revendications**

**1.** Un dispositif moteur pour disque optique comprenant :

une tête optique (104) qui forme un spot lumineux sur une disque optique (101) portant des pistes multiples et comporte un photodétecteur (113) qui reçoit de la lumière réfléchie par lesdites pistes et fournit un signal de conversion photoélectrique, et un équipage mobile comportant une lentille (111) servant & concentrer ledit spot lumineux sur ledit disque optique ;

un positionneur de tête (116) qui est relié à ladite tête optique et qui, lorsque ladite tête optique accède auxdites pistes dudit disque optique, meut ledit équipage mobile dans une direction radiale dudit disque optique ;

un moyen de détection de mouvement (20, 2A) qui est relié audit photodétecteur (113) et qui reçoit ledit signal de conversion photoélectrique fourni par ledit photodétecteur et fournit en sortie un signal de mouvement de traversée de pistes représentatif du mouvement de traversée de pistes dudit spot lumineux ;

un moyen générateur de vitesse de consigne (119) servant à générer une vitesse de consigne de traversée de pistes ; et

un circuit de commande de positionneur de tête (117) relié audit moyen générateur de vitesse de consigne pour piloter ledit positionneur de tête ; caractérisé par

un moyen détecteur d'accélération (121) servant à détecter l'accélération dudit positionneur de tête et à fournir un signal de sortie qui en est représentatif ; et

un moyen d'observation d'état (3) qui est relié audit moyen détecteur d'accélération (121) et audit moyen de détection de mouvement (20, 2A) et fournit en tant que signal de sortie une vitesse de traversée de pistes estimée dudit spot lumineux sur la base des signaux de sortie dudit moyen détecteur d'accélération (121) et dudit moyen détecteur de mouvement (20, 2A), ce signal de sortie étant délivré au circuit de commande de positionneur de tête pour piloter ledit positionneur de tête de manière que le vitesse estimée coïncide avec ladite vitesse de consigne.

2. Un dispositif selon la revendication 1, dans lequel ledit moyen d'observation d'état (3) présente une fréquence de coupure inférieure à une fréquence de résonance mécanique dudit positionneur de tête (16) ou de ladite tête optique (104) et à la fréquence de traversée de pistes du spot lumineux, mais supérieure à une fréquence fondamentale de fluctuation de pistes.

3. Un dispositif selon la revendication 1 ou 2, comprenant en outre un moyen de détection de mode de commande (4) relié audit moyen d'observation d'état (3), et dans lequel ledit moyen d'observation d'état comporte un intégrateur (12, 24) qui est remis à zéro par un signal de sortie en provenance dudit moyen de détection de mode de commande pendant le suivi desdites pistes par ledit spot lumineux.

4. Un dispositif selon l'uns quelconque des revendications 1 à 3, dans lequel ledit moyen détecteur d'accélération présente la forme d'un moyen (121) de détection du courant d'excitation dudit positionneur de tête.

5. Un dispositif selon l'une quelconque des revendications 1 à 4, dans lequel ledit positionneur de tête (116) est un positionneur linéaire.

6. Un dispositif selon l'une quelconque des revendications 1 à 5, dans lequel ledit moyen d'observation d'état comprend :
un simulateur (9, 10, 12, 13, 21, 22, 23, 24, 25) propre à simuler les caractéristiques de transfert nominales du positionneur de tête ; et
des moyens (11, 14, 15, 11A, 11B, 12A, 14A, 16A, 22, 17A, 18A, 23, 24) propres à combiner la sortie dudit détecteur de mouvement de traversée de pistes et dudit simulateur pour fournir ladite vitesse de traversée de pistes estimée.

7. Un dispositif selon la revendication 6, dans lequel ledit moyen de combinaison comprend :
un soustracteur (14) recevant la vitesse détectée fournie par le circuit de détetion de vitesse :
un élément de gain de rétroaction (11) recevant la sortie du soustracteur :
un additionneur (15) additionnant la sortie de l'élément de gain de rétroaction (11) et la sortie dudit simulateur et fournissant la somme ;
un intégrateur (12) propre à intégrer la sortie de somme de l'additionneur (12) ; et
un élément de gain (13) recevant la sortie de l'intégrateur (12) ;
ledit soustracteur (14) recevant aussi la sortie dudit élément de gain (13) et déterminant la différence entre ladite vitesse estimée et la sortie dudit élément de gain (13) : et
la sortie dudit élément de gain (13) étant la vitesse de traversée de pistes estimée.

8. Un dispositif selon la revendication 6, dans lequel lesdit moyens de combinaison comprennent :
un élément de gain de rétroaction (12) recevant la distance détectée en provenance du moyen de détection de distance ;
un soustracteur (14A) déterminant la différence entre la sortie de l'élément de gain de rétroaction et la sortie dudit simulateur ;
un élément à retard du premier ordre (13) recevant la sortie dudit soustracteur (14A) ;
un élément de gain (21) recevant la sortie dudit élément à retard du premier ordre (13) ;
un élément de gain de rétroaction (11) recevant la distance détectée en provenance du moyen de détection de distance ; et
un additionneur (15A) propre à additionner la sortie de l'élément de gain de rétroaction (11) et la sortie de l'élément de gain (21) ;
la sortie dudit additionneur (15A) étant la vitesse de traversée de pistes estimée.

9. Un dispositif selon l'une quelconque des revendications 1 à 8, dans lequel ledit moyen de détection de mouvement (20) détecte la vitesse dudit équipage mobile de ladite tête optique.

EP 0 270 357 B1

**10.** Un dispositif selon l'une quelconque des revendications 1 à 8, dans lequel ledit moyen de détection de mouvement (2A) détecte la distance dont ledit équipage mobile de ladite tête optique a été déplacé transversalement aux pistes.

**Patentansprüche**

**1.** Antriebsgerät für optische Platten, welches aufweist:
- einen optischen Kopf (104), der einen Lichtpunkt auf einer optischen Platte (101) mit einer Vielzahl von Spuren erzeugt und der einen Fotodetektor (113), der von den Spuren reflektiertes Licht empfängt und ein fotoelektrisches Umwandlungssignal liefert, sowie einen eine Linse (111) enthaltenden bewegbaren Teil zum Fokussieren des Lichtpunktes auf der optischen Platte enthält;
- eine Kopfbetätigungseinrichtung (116), die mit dem optischen Kopf verbunden ist und die, wenn ein Zugriff des optischen Kopfes zu den Spuren auf der optischen Platte besteht, den bewegbaren Teil in radialer Richtung der optischen Platte bewegt;
- eine Bewegungserfassungseinrichtung (20, 2A), die mit dem Fotodetektor (113) verbunden ist und die die von diesem erzeugten fotoelektrischen Umwandlungssignale empfängt und als Ausgangssignal ein Spurquerbewegungssignal erzeugt, das der Spurquerbewegung des Lichtpunktes entspricht;
- eine Zielgeschwindigkeits-Erzeugungseinrichtung (119) zur Erzeugung einer Spurquer-Zielgeschwindigkeit; und
- eine Kopfbetätigungs-Antriebsschaltung (*117), die mit der Zielgeschwindigkeits-Erzeugungseinrichtung verbunden ist zur Steuerung der Kopfbetätigungseinrichtung;
**gekennzeichnet** durch
- eine Beschleunigungserfassungseinrichtung (121) zur Erfassung der Beschleunigung der Kopfbetätigungseinrichtung und zur Erzeugung eines dieser entsprechenden Ausgangssignals; und
- eine Zustandsüberwachungseinrichtung (3), die mit der Beschleunigungserfassungseinrichtung (121) und der Bewegungserfassungseinrichtung (20, 2A) verbunden ist und als Ausgangssignal eine geschätzte Spurquergeschwindigkeit des Lichtpunktes, basierend auf den Ausgangssignalen der Beschleunigungserfassungseinrichtung (121) und der Bewegungserfassungseinrichtung (20, 2A), erzeugt, das zu der Kopfbetätigungs-Antriebsschaltung geliefert wird, um die Kopfbetätigungseinrichtung so zu steuern, daß die geschätzte Geschwindigkeit mit der Zielgeschwindigkeit übereinstimmt.

**2.** Gerät nach Anspruch 1,
worin eine Abschaltfrequenz der Zustandsüberwachungseinrichtung (3) niedriger ist als eine mechanische Resonanzfrequenz der Kopfbetätigungseinrichtung (116) des optischen Kopfes (104) und die Spurüberquerungsfrequenz des Lichtpunktes, jedoch höher als eine Spurfluktuations-Grundwellenfrequenz ist.

**3.** Gerät nach Anspruch 1 oder 2,
das weiterhin eine mit der Zustandsüberwachungseinrichtung (3) verbundene Steuerart-Erfassungseinrichtung (4) aufweist und bei dem die Zustandsüberwachungseinrichtung einen Integrator (12, 24) enthält, der durch ein Ausgangssignal von der Steuerart-Erfassungseinrichtung während der Verfolgung der Spuren durch den Lichtpunkt zurückgesetzt wird.

**4.** Gerät nach einem der Ansprüche 1 bis 3,
worin die Beschleunigungserfassungeinrichtung eine Einrichtung (121) zur Erfassung des Antriebsstroms der Kopfbetätigungseinrichtung ist.

**5.** Gerät nach einem der Ansprüche 1 bis 4,
worin die Kopfbetätigungseinrichtung (116) eine Linearbetätigungseinrichtung ist.

**6.** Gerät nach einem der Ansprüche 1 bis 5,
worin die Zustandsüberwachungseinrichtung aufweist:
- einen Simulator (9,10,12,13,21,22,23,24,25) zum Nachbilden der nominellen Übertragungscharakteristiken der Kopfbetätigungseinrichtung; und

20

- eine Einrichtung (11,14,15,11A,11B,12A,14A, 16A,22,17A,18A,23,24) zum Verknüpfen der Ausgangssignale der Spurüberquerungs-Bewegungserfassungseinrichtung und des Simulators zur Erzeugung der geschätzten Spurquergeschwindigkeit.

7.  Gerät nach Anspruch 6,
worin die Einrichtung zum Verknüpfen aufweist:
- ein Subtrahierglied (14), das die erfaßte Geschwindigkeit von der Geschwindigkeitserfassungsschaltung empfängt;
- ein Rückkopplungs-Verstärkungselement (11), das das Ausgangssignal des Subtrahiergliedes empfängt;
- ein Additionsglied (15), das die Ausgangssignale des Rückkopplungs-Verstärkungselementes (11) und des Simulators addiert und die Summe erzeugt;
- einen Integrator (12) zur Integration des Summenausgangssignals des Additionsgliedes (15); und
- ein Verstärkungselement (13), das das Ausgangssignal des Integrators (12) empfängt;
wobei das Subtrahierglied (14) auch das Ausgangssignal des Verstärkungselementes (13) empfängt und die Differenz zwischen der geschätzten Geschwindigkeit und dem Ausgangssignal des Verstärkungselementes (13) bestimmt; und
wobei das Ausgangssignal des Verstärkungselementes (13) die geschätzte Spurquergeschwindigkeit ist.

8.  Gerät nach Anspruch 6,
worin die Einrichtung zum Verknüpfen aufweist:
- ein Rückkopplungs-Verstärkungselement (12), das den erfaßten Abstand von der Abstandserfassungseinrichtung empfängt;
- ein Subtrahierglied (14A), das die Differenz zwischen den Ausgangssignalen des Rückkopplungs-Verstärkungselementes (12) und des Simulators bestimmt;
- ein Verzögerungselement erster Ordnung (13), das das Ausgangssignal des Subtrahiergliedes (14A) empfängt;
- ein Verstärkungselement (21), das das Ausgangssignal des Verzögerungselementes erster Ordnung (13) empfängt;
- ein Rückkopplungs-Verstärkungselement (11) das den erfaßten Abstand von der Abstandserfassungseinrichtung empfängt; und
- ein Additionsglied (15A) zur Addition der Ausgangssignale des Rückkopplungs-Verstärkungselementes (11) und des Verstärkungselementes (21);
wobei das Ausgangssignal des Additionsgliedes (15A) die geschätzte Spurquergeschwindigkeit ist.

9.  Gerät nach einem der Ansprüche 1 bis 8,
worin die Bewegungserfassungseinrichtung (120) die Geschwindigkeit des bewegbaren Teils des optischen Kopfes erfaßt.

10. Gerät nach einem der Ansprüche 1 bis 8,
worin die Bewegungserfassungseinrichtung (2A) den Abstand erfaßt, den der bewegbare Teil des optischen Kopfes quer zu den Spuren zurückgelegt hat.

# FIG.1

VELOCITY DETECTION CIRCUIT

SPEED DETECTION CIRCUIT — 120

POLARITY SWITCHING CIRCUIT — 2

124 VELOCITY DETECTION CIRCUIT

ACCESS DIRECTION COMMAND GENERATION CIRCUIT — 123

ADDITION/SUBTRACTION AMPLIFYING CIRCUIT — 114

TRACK-TRAVERSING COUNTER — 118

TARGET VELOCITY GENERATION CIRCUIT — 119

DISK-DRIVE MOTOR — 102

DISK MOTOR CONTROL CIRCUIT — 103

101, 115, 112, 111, 110, 112, 109, 108, 107, 106, 113, 104, 105

HEAD ACTUATOR — 116

HEAD ACTUATOR DRIVE CONTROL CIRCUIT — 117

# FIG.2
## PRIOR ART

$$K_V \quad 119$$

$$V_r \quad V_e \quad K_C \quad 5 \quad G_N(S) \quad 122 \quad K_A \quad 6 \quad K_F \quad 7 \quad \frac{G_L(S)}{MS} \quad 8 \ 116 \quad V_L \quad V_d \quad K_V \frac{1-e^{ST}}{S\tau} \quad 124 \quad V_s^*$$

117

# FIG.3

GAIN

$|G_L(S)|$

0dB

$\omega_L$

FREQUENCY

# FIG.4

GAIN

$|G_N(S)|$

0dB

$\omega_N$

FREQUENCY

# FIG.5

GAIN

OdB ——————— FREQUENCY

PHASE

-180° ——————— FREQUENCY

# FIG.6

GAIN

OdB ——————— FREQUENCY

PHASE

-180° ——————— FREQUENCY

# FIG.7

EP 0 270 357 B1

# FIG.8

STATE-OBSERVER UNIT

# F I G . 9

# F I G . 10

# FIG.11

# FIG.12

F I G .13

20

VELOCITY
DETECTION
CIRCUIT — 120

POLARITY
SWITCHING
CIRCUIT — 2

151 — 150

ACCESS DIRECTION
COMMAND
GENERATION
CIRCUIT

# FIG.14

EP 0 270 357 B1

# FIG.15

FIG.16

# F I G.17

EP 0 270 357 B1

# F I G .18

# F I G .19

# FIG.20